# EUROPÄISCHE PATENTSCHRIFT

(11) **EP 1 024 944 B1**
(45) Veröffentlichungstag und Bekanntmachung des Hinweises auf die Patenterteilung: **02.01.2002**
(21) Anmeldenummer: 98949814.2
(22) Anmeldetag: 21.10.1998
(51) Int. Cl.: B29D 7/01, B29C 55/08

(54) **VERFAHREN ZUR HERSTELLUNG CELLULOSISCHER FORMKÖRPER**
METHOD FOR PRODUCING CELLULOSIC SHAPED BODIES
PROCEDE DE PRODUCTION DE CORPS FACONNES CELLULOSIQUES

(30) Priorität: 23.10.1997 AT 179897
(43) Veröffentlichungstag der Anmeldung: 09.08.2000
(73) Patentinhaber: LENZING AKTIENGESELLSCHAFT, 4860 Lenzing (AT)
(72) Erfinder: SCHLOSSNIKL, Christian, A-4840 Vöcklabruck (AT); GSPALTL, Peter, A-8071 Grambach (AT); RIEDL, Gerold, A-4870 Pfaffing (AT); SCHWEIGART, Andreas, A-4880 St. Georgen (AT)
(74) Vertreter: Schwarz, Albin, Dr.
(86) Internationale Anmeldenummer: AT9800251
(87) Internationale Veröffentlichungsnummer: WO9921700

(56) Entgegenhaltungen:
- WO-A-97/24215
- DE-B- 1 273 173
- US-A- 2 483 339
- US-A- 3 444 585
- US-A- 3 557 262
- DATABASE WPI Section Ch, Week 8609 Derwent Publications Ltd., London, GB; Class A92, AN 86-059614 XP002090254 & JP 61 012319 A (MITSUI TOATSU CHEM INC) , 20. Januar 1986

## Beschreibung

Die vorliegende Erfindung betrifft ein Verfahren zur Herstellung cellulosischer Formkörper, insbesondere cellulosischer Flachfolien, wobei eine Lösung von Cellulose in einem wässerigen tertiären Aminoxid mittels einer Extrusionsdüse, die einen länglichen Extrusionsspalt aufweist, folienartig als Bahn ausgeforrnt und durch einen Luftspalt in ein Fällbad transportiert wird, wobei im Fällbad die cellulosische Flachfolie gebildet wird.

Aus der US-A-2 179 181 ist bekannt, daß tertiäre Aminoxide Cellulose zu lösen vermögen und daß aus diesen Lösungen durch Fällung cellulosische Formkörper wie Fasern gewonnen werden können. Ein Verfahren zur Herstellung derartiger Lösungen ist beispielsweise aus der EP-A-0 356 419 bekannt. Gemäß dieser Veröffentlichung wird zunächst eine Suspension von Cellulose in einem wässerigen tertiären Aminoxid bereitet. Das Aminoxid enthält bis zu 40 Masse% Wasser. Die wässerige Cellulosesuspension wird in einem Dünnschichtbehandlungsapparat in die Lösung übergeführt.

Aus der DE-A-28 44 163 ist bekannt, zur Herstellung von Cellulosefasern zwischen Spinndüse und Fällbad einen Luftspalt zu legen, um einen Düsenverzug zu ermöglichen. Dieser Düsenverzug ist notwendig, da nach Kontakt der geformten Spinnlösung mit dem wässerigen Fällbad eine Reckung der Fäden sehr erschwert wird. Im Fällbad wird die im Luftspalt eingestellte Faserstruktur fixiert.

Ein Verfahren zur Herstellung cellulosischer Fäden ist weiters aus der DE-A-28 30 685 bekannt, wonach eine Lösung von Cellulose in einem tertiären Aminoxid in warmem Zustand zu Fiiamenten geformt wird, die Filamente mit Luft abgekühlt und anschließend in ein Fällbad eingebracht werden, um die gelöste Cellulose zu fällen. Die Oberfläche der versponnenen Fäden wird weiters mit Wasser benetzt, um ihre Neigung, an benachbarten Fäden anzukleben, zu vermindern.

Die Herstellung von cellulosischen Flachfolien aus einer Lösung von Cellulose in einem wässerigen tertiären Aminoxid erfolgt bei heute üblichen Verfahren durch Extrusion der Lösung durch eine Extrusionsdüse mit länglichem Extrusionsspalt, d.h. einer Flachdüse. in einen Luftspalt, wobei gegebenenfalls die folienartig als Bahn ausgeformte Lösung im Luftspalt verzogen wird. Bei höheren Längsverzügen kommt es zu einem starken Querschrumpf der folienartig ausgeformten Lösung bzw. der cellulosischen Flachfolie entlang der Strecke vom Düsenaustritt bis zum Fällbad und insbesondere weiter entlang der gesamten Waschstrecke. Zusätzlich muß die Folie während des Trocknens mittels aufwendiger mechanischer Mittel, wie z.B. Kluppen, breitgehalten werden. Zur Erzielung biaxial verbesserter mechanischer Eigenschaften ist es weiters erforderlich, die folienartig ausgeformte Lösung bzw. die cellulosische Flachfolie in Querrichtung zu verstrecken.

Die bei der Herstellung von thermoplastischen Flachfolien angewandten Verfahren für das Breithalten bzw. Verstrecken der Folien in Querrichtung verwenden an endlosen Bändern bzw. Ketten angebrachte Klemmvorrichtungen (Kluppen). Durch Führung der Klemmvorrichtungen in divergierende Richtungen wird die Folie auf ein Vielfaches ihrer Ausgangsbreite verstreckt (Handbuch der Kunststoffextrusionstechnik, II, Extrusionsanlagen, Hanser-Verlag, 1986, 261-269). Diese Art der Querverstreckung ist jedoch mit einem enormen Aufwand verbunden.

Aus der DE-A-195 15 137 ist ein Verfahren zur Herstellung von Flachfolien bekannt, wobei mittels einer Ringdüse zunächst eine Schlauchfolie hergestellt wird, die nach Waschen und Trocknen zu Flachfolien aufgeschnitten wird. Bei der Herstellung der Schlauchfolie wird der extrudierte Schlauch im Luftspalt nicht nur in Abzugsrichtung verstreckt, sondern auch in Querrichtung aufgedehnt. Dies geschieht durch einen im Inneren des Schlauches wirksamen Gasdruck. Die Nachteile dieses Verfahrens bestehen im komplizierten Aufbau der zu verwendenden Vorrichtung sowie im Wasch- und Trocknungsprozeß, der bei Schlauchfolien aufwendiger ist als bei Flachfolien

Aus der WO-A-97/24215 ist ein Verfahren zur Herstellung einer cellulosischen Folie bekannt, bei dem eine cellulosische Lösung auf eine dehnbare Oberfläche aufgebracht wird, auf der die Lösung anhaftet, die Lösung anschließend durch Strecken der dehnbaren Oberfläche verstreckt und schließlich gefällt wird. Nachteilig ist hierbei jedoch der komplizierte Aufbau der verwendeten Vorrichtung.

Der vorliegenden Erfindung liegt die Aufgabe zugrunde, ein Verfahren zur Herstellung cellulosischer Flachfolien mit verbesserten mechanischen Eigenschaften zur Verfügung zu stellen, welches Verfahren die oben beschriebenen Nachteile nicht aufweist und bei dem es möglich sein soll, die cellulosischen Flachfolien ohne großen Aufwand zu führen und zu verstrecken.

Erfindungsgemäß wird die Aufgabe bei einem Verfahren zur Herstellung cellulosischer Flachfolien, wobei eine Lösung von Cellulose in einem wässerigen tertiären Aminoxid mittels einer Extrusionsdüse, die einen länglichen Extrusionsspalt aufweist, folienartig als Bahn ausgeformt und durch einen Luftspalt in ein Fällbad transportiert wird, wobei im Fällbad die cellulosische Flachfolie gebildet wird, dadurch gelöst, daß die als Bahn ausgeformte Lösung an ihren Seitenrändern mit cellulosischen Bändern in Kontakt gebracht und verbunden wird und daß die cellulosischen Bänder an den Seitenrändern der als Bahn ausgeformten Lösung und gegebenenfalls der cellulosischen Flachfolie so geführt werden, daß ein Querschrumpf verhindert wird.

Unter cellulosischen Bändern wird hierbei jegliches band-, schnur- oder strangförmige cellulosisches Material verstanden, das sich in Längsrichtung erstreckt, beispielsweise Schnüre, Garne, Flachbänder und dergleichen auf cellulosischer Basis.

Nach einer bevorzugten Ausführungsform des erfindungsgemäßen Verfahrens werden die cellulosischen Bänder mit der als Bahn ausgeformten Lösung durch Pressen verbunden.

Nach einer weiteren bevorzugten Ausführungsform werden die cellulosischen Bänder mit der als Bahn ausgeformten Lösung durch Zug verbunden. Zweckmäßig wird hierbei die als Bahn ausgeformte Lösung durch den Luftspalt mittels einer Umlenkung schräg nach unten transportiert, wobei durch den hierdurch entstehenden Zug die als Bahn ausgeformte Lösung mit den cellulosischen Bändern verbunden wird. Gegebenenfalls kann aber auch nach dieser Ausführungsform zusätzlich ein Verbinden durch Pressen erfolgen.

Vorteilhaft werden die cellulosischen Bänder mit der als Bahn ausgeformten Lösung durch Zug- und/oder Preßvorrichtungen, insbesondere Walzen, welche mit Fällflüssigkeit benetzt sind, verbunden.

Gemäß einer bevorzugten Ausführungsform des Verfahrens wird die mit den cellulosischen Bändern verbundene cellulosische Flachfolie durch das Fällbad und danach weiter durch eine Waschstrecke geführt. Gemäß einer weiters bevorzugten Ausführungsform wird die mit den cellulosischen Bändern verbundene cellulosische Flachfolie nach der Waschstrecke noch über einen Trockner geführt. Vorzugsweise wird die mit den cellulosischen Bändern verbundene cellulosische Flachfolie nach dem Trockner weiters zu einer Wickelvorrichtung geführt.

Durch Anwendung dieses Verfahrens wird die cellulosische Flachfolie über die gesamte Strecke vom Fällbad über die Waschstrecke und den Trockner zur Wickelvorrichtung exakt geführt. Ein Vorteil der Ausführung besteht darin, daß keine speziellen Mechanismen zum Breithalten der cellulosischen Flachfolie benötigt werden und ein Querschrumpf der Flachfolie wirksam vermieden wird, da die Flachfolie über die gesamte Strecke durch die Führung der cellulosischen Bänder gehalten wird. Ein weiterer Vorteil besteht darin, daß ein aufwendiges Einfädeln der cellulosischen Flachfolie durch alle Umlenkwalzen im Fällbad und entlang der Waschstrecke entfällt, weil die Flachfolie von den cellulosischen Bändern mitgenommen wird.

Gemäß einer bevorzugten Ausführungsform werden die cellulosischen Bänder über Spurrillen geführt. Hierbei weisen alle Kalander und Umlenkungsorgane die entsprechenden Spurrillen auf.

Gemäß einer weiteren bevorzugten Ausführungsform werden die cellulosischen Bänder durch Zug oder Druck, beispielsweise mittels Preßwalzen, geführt, wobei die cellulosischen Bänder in entsprechenden Abständen geführt und gehalten werden. Gegebenenfalls können die Preßwalzen ebenfalls Spurrillen für die Bänder aufweisen.

Vorzugsweise wird die cellulosische Flachfolie durch divergierendes bzw. auseinanderlaufendes Führen der cellulosischen Bänder querverstreckt. Unter Querverstrecken wird hierbei verstanden, daß ein Verstrecken in Richtung der Breite der cellulosischen Flachfolie erfolgt.

Als cellulosische Bänder werden zweckmäßigerweise Schnüre, Garne, Flachbänder und dergleichen auf cellulosischer Basis verwendet. Vorteilhaft können die cellulosischen Bänder nach erfolgter Randbeschneidung der cellulosischen Flachfolie abgezogen und wiederum eingesetzt werden.

Eine besondere Ausführungsform verwendet als cellulosische Bänder die zu einer Schnur verzwirnten, bei der Randbeschneidung der Flachfolie anfallenden Randstreifen.

Gemäß einer weiteren bevorzugten Ausführungsform wird die als Bahn ausgeformte Lösung im Luftspalt in Längsrichtung verstreckt.

Es hat sich als zweckmäßig erwiesen, daß die cellulosischen Bänder vor dem Verbinden mit der als Bahn ausgeformten Lösung mit einer Lösung eines tertiären Aminoxids getränkt werden, wodurch die Oberfläche der cellulosischen Bänder angelöst und damit das Verbinden erleichtert wird.

Beim erfindungsgemäßen Verfahren wird als tertiäres Aminoxid vorzugsweise N-Methylmorpholin-N-oxid (NMMO) verwendet.

An Hand der beigefügten Zeichnung werden bevorzugte Ausführungsformen der Erfindung noch näher erläutert.

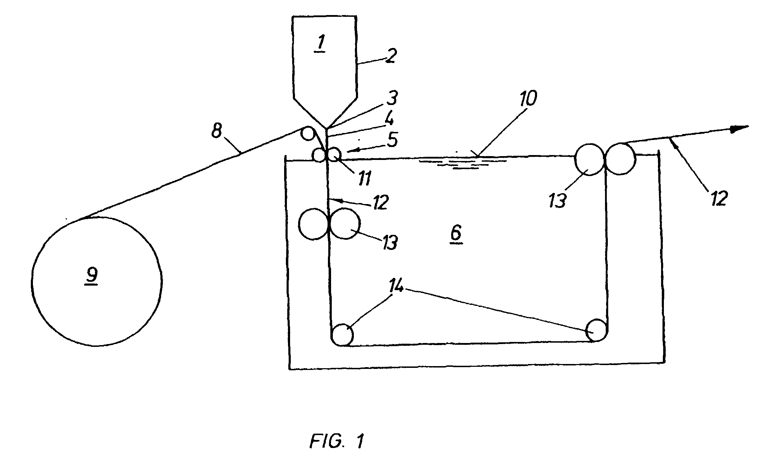

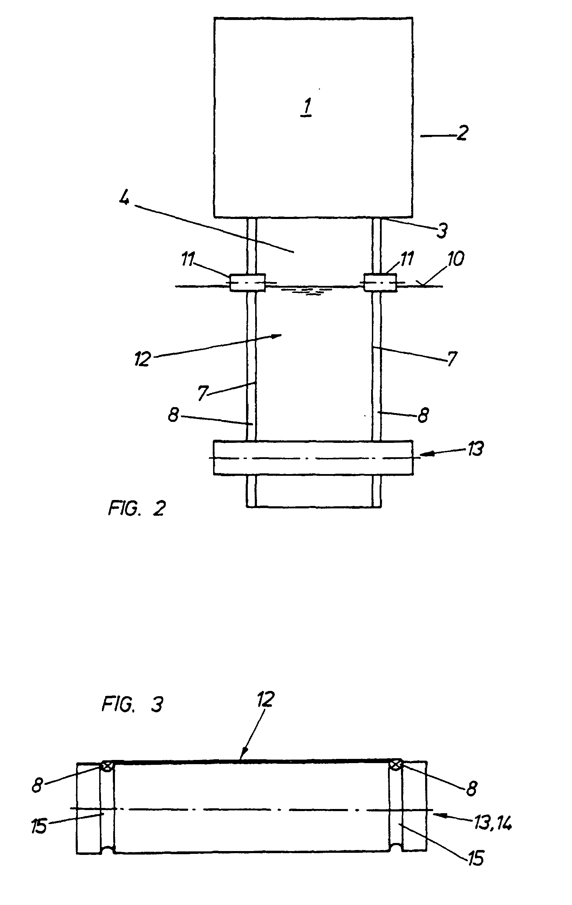

Die Fig. 1 und 2 zeigen schematisch eine Vorrichtung zur Durchführung des erfindungsgemäßen Verfahrens, wobei in Fig. 1 eine Seitenansicht der Vorrichtung dargestellt ist und Fig. 2 ein Detail der Vorrichtung von Fig. 1 in Vorderansicht zeigt. Eine Lösung 1 von Cellulose in einem wässerigen Aminoxid wird mittels einer Extrusionsdüse 2 mit länglichem Extrusionsspalt 3 folienartig als Bahn 4 ausgeformt und durch einen Luftspalt 5 in ein Fällbad 6 transportiert. Beim Eintritt der als Bahn 4 ausgeformten Lösung in das Fällbad 6 wird die als Bahn 4 ausgeformte Lösung an ihren Seitenrändern 7 mit cellulosischen Bändern 8, die von einer Abwickelvorrichtung 9 abgewickelt werden, in Kontakt gebracht und mit den cellulosischen Bändern 8 verbunden. Das Verbinden erfolgt durch unmittelbar über der Fällbadoberfläche 10 angeordnete Preßwalzen 11.

Beim Eintritt in das Fällbad 6 wird die als Bahn 4 ausgeformte Lösung gefällt, wobei eine cellulosische Flachfolie 12 gebildet wird. Die cellulosische Flachfolie 12 ist an ihren Seitenrändern 7 mit den cellulosischen Bändern 8 fest verbunden. Die cellulosischen Bänder 8 werden über Kalander 13 und Umlenkwalzen 14 durch das Fällbad 6 geführt, wobei die cellulosische Flachfolie 12 von den cellulosischen Bändern 8 gehalten wird.

Die mit den cellulosischen Bändern 8 verbundene cellulosische Flachfolie 12 wird aus dem Fällbad 6 weiter über eine nicht näher dargestellte Waschstrecke. sowie über einen ebenfalls nicht dargestellten Trockner bis zu einer nicht dargestellten Wickelvorrichtung geführt.

Wie in Fig. 3 näher dargestellt, werden die cellulosischen Bänder 8 mittels Spurrillen 15, die auf den Kalandern 13 und Umlenkwalzen 14 vorgesehen sind, geführt. Die cellulosische Flachfolie 12 wird hierbei über die gesamte Strecke im Fällbad 6 durch die cellulosischen Bänder 8 gehalten, so daß ein Querschrumpf der cellulosischen Flachfolie 12 zuverlässig vermieden wird. Durch geeignete Maßnahmen, beispielsweise eine Änderung der Spurweite der Spumllen 15 kann die cellulosische Flachfolie 12 querverstreckt werden.

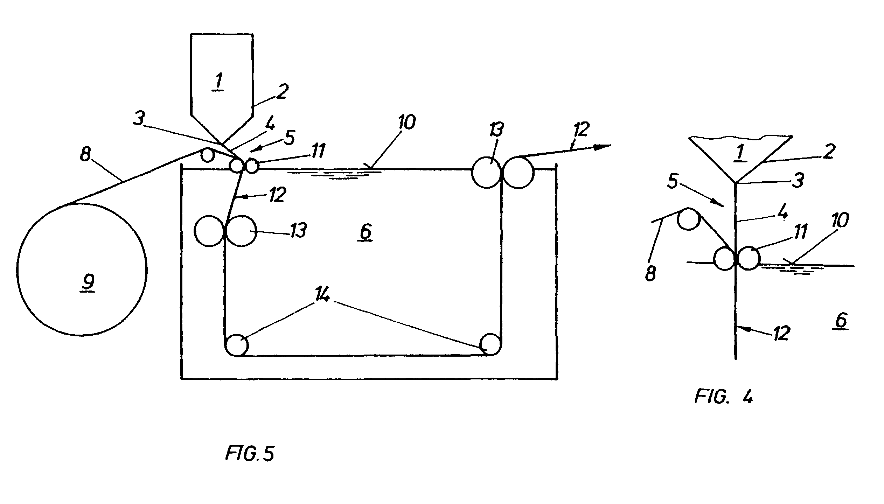

In Fig. 4 ist das Verbinden der als Bahn 4 ausgeformten Lösung 1 von Cellulose in einem wässerigen Aminoxid mit den cellulosischen Bändern 8 mittels Preßwalzen 11 noch näher dargestellt. Durch den Kontakt von wässerigem Aminoxid mit den cellulosischen Bändern 8 werden diese an ihrer Oberfläche angelöst, so daß ein rasches und festes Verbinden mit der als Bahn 4 ausgeformten Lösung sichergestellt ist. Um ein Anhaften der als Bahn 4 ausgeformten Lösung an den Preßwalzen 11 zu verhindern, tauchen die Preßwalzen 11 teilweise in das Fällbad 6 ein, so daß bei Kontakt der als Bahn 4 ausgeformten Lösung mit dem Fällbad 6 die Lösung gefällt wird und ein Anhaften der als Bahn 4 ausgeformten Lösung auf den Preßwalzen 11 verhindert wird.

Gemäß der in Fig. 5 dargestellten Ausführungsform des erfindungsgemäßen Verfahrens wird die als Bahn 4 ausgeformte Lösung im Luftspalt 5 schräg nach unten abgezogen, wobei die Preßwalzen 11 gleichzeitig als Umlenkwalzen wirken. Durch den ausgeübten Zug wird die als Bahn 4 ausgeformte Lösung ebenfalls mit den cellulosischen Bändern 8 verbunden.

## Patentansprüche

1. Verfahren zur Herstellung cellulosischer Flachfolien (12), wobei eine Lösung (1) von Cellulose in einem wässerigen tertiären Aminoxid mittels einer Extrusionsdüse (2), die einen länglichen Extrusionsspalt (3) aufweist, folienartig als Bahn (4) ausgeformt und durch einen Luftspalt (5) in ein Fällbad (6) transportiert wird, wobei im Fällbad (6) die cellulosische Flachfolie (12) gebildet wird,
**dadurch gekennzeichnet,**
**daß** die als Bahn (4) ausgeformte Lösung an ihren Seitenrändem (7) mit cellulosischen Bändern (8) in Kontakt gebracht und verbunden wird und daß die cellulosischen Bänder (8) an den Seitenrändern (7) der als Bahn (4) ausgeformten Lösung und gegebenenfalls der cellulosischen Flachfolie (12) so geführt werden, daß ein Querschrumpf verhindert wird.

2. Verfahren nach Anspruch 1, **dadurch gekennzeichnet, daß** die cellulosischen Bänder (8) mit der als Bahn (4) ausgeformten Lösung durch Pressen verbunden werden.

3. Verfahren nach Anspruch 1 oder 2, **dadurch gekennzeichnet, daß** die cellulosischen Bänder (8) mit der als Bahn (4) ausgeformten Lösung durch Zug verbunden werden.

4. Verfahren nach einem der Ansprüche 1 bis 3, **dadurch gekennzeichnet, daß** die cellulosischen Bänder (8) mit der als Bahn (4) ausgeformten Lösung durch Zug- und/oder Preßvorrichtungen (11), insbesondere Walzen, welche mit Fällflüssigkeit benetzt sind, verbunden werden.

5. Verfahren nach einem der Ansprüche 1 bis 4, **dadurch gekennzeichnet, daß** die mit de cellulosischen Bändern (8) verbundene cellulosische Flachfolie (12) durch das Fällbad (6) ur danach durch eine Waschstrecke geführt wird.

6. Verfahren nach Anspruch 5, **dadurch gekennzeichnet, daß** die mit den cellulosischer Bändern (8) verbundene cellulosische Flachfolie (12) nach der Waschstrecke über einen Trockner geführt wird.

7. Verfahren nach Anspruch 6, **dadurch gekennzeichnet, daß** die mit den cellulosische Bändern (8) verbundene cellulosische Flachfolie (12) nach dem Trockner zu einer Wickelvorrichtung geführt wird.

8. Verfahren nach einem oder mehreren der Ansprüche 1 bis 7, **dadurch gekennzeichnet, daß** die cellulosischen Bänder (8) über Spurrillen (15) geführt werden.

9. Verfahren nach einem oder mehreren der Ansprüche 1 bis 8, **dadurch gekennzeichnet, daß** die cellulosischen Bänder (8) durch Zug oder Druck, beispielsweise mittels Preßwalzen, geführt werden.

10. Verfahren nach einem oder mehreren der Ansprüche 1 bis 9, **dadurch gekennzeichnet, daß** die cellulosische Flachfolie (12) durch divergierendes Führen der cellulosischen Bänder (8) querverstreckt wird.

11. Verfahren nach einem oder mehreren der Ansprüche 1 bis 10, **dadurch gekennzeichnet, daß** als cellulosische Bänder (8) zu einer Schnur verzwirnte, bei der Randbeschneidung einer durch ein Verfahren gemäß einem der Ansprüche 1 bis 10 hergestellten cellulosischen Flachfolie (12) anfallende Randstreifen eingesetzt werden.

12. Verfahren nach einem oder mehreren der Ansprüche 1 bis 11, **dadurch gekennzeichnet, daß** die cellulosischen Bänder (8) vor dem Verbinden mit der als Bahn (4) ausgeformten Lösung mit einer Lösung eines tertiären Aminoxids getränkt werden.

## Claims

1. A method for producing cellulosic flat films (12), whereby a solution (1) of cellulose in an aqueous tertiary amine oxide is discharged in the manner of a film as a web (4) by means of an extrusion die (2) comprising an oblong extrusion gap (3) and is transported through an air gap (5) into a regenerating bath (6), whereby the cellulosic flat film (12) is formed in the regenerating bath (6),
**characterised in that** the solution discharged as a web (4) is brought into contact with and joined to cellulosic strips (8) at its side edges (7)
**and in that** the cellulosic strips (8) are conveyed at the side edges (7) of the solution discharged as a web (4) and where appropriate of the cellulosic flat film (12) so that a transverse shrinkage is prevented.

2. A method according to Claim 1,
**characterised in that** the cellulosic strips (8) are joined to the solution discharged as web (4) by pressing.

3. A method according to Claim 1 or 2,
**characterised in that** the cellulosic strips (8) are joined to the solution discharged as a web (4) by pulling.

4. A method according to one of Claims 1 to 3,
**characterised in that** the cellulosic strips (8) are joined to the solution discharged as a web (4) by pulling and or pressing devices (11), in particular rollers, which are moistened with regenerating liquid.

5. A method according to one of Claims 1 to 4,
**characterised in that** the cellulosic flat film (12) joined to the cellulosic strips (8) is conveyed through the regenerating bath (6) and then through a washing section.

6. A method according to Claim 5,
**characterised in that** the cellulosic flat film (12) joined to the cellulosic strips (8) is conveyed via a drier after the washing section.

7. A method according to Claim 6,
**characterised in that** the cellulosic flat film (12) joined to the cellulosic strips (8) is conveyed to a winding device after the drier.

8. A method according to one or more of Claims 1 to 7,
**characterised in that** the cellulosic strips (8) are conveyed over rail grooves (15).

9. A method according to one or more of Claims 1 to 8,
**characterised in that** the cellulosic strips (8) are conveyed by pulling or thrust, for example by means of press rollers.

10. A method according to one or more of Claims 1 to 9,
**characterised in that** the cellulosic flat film (12) is transversely drawn by divergent conveyance of the cellulosic strips (8).

11. A method according to one or more of Claims 1 to 10,
**characterised in that** edge strips, which are twisted to form a cord and result during the edge cutting of a cellulosic flat film (12) produced by a method according to one of Claims 1 to 10, are used as cellulosic strips (8).

12. A method according to one or more of Claims 1 to 11,
**characterised in that,** prior to being joined with the solution discharged as a web (4), the cellulosic strips (8) are soaked with a solution of a tertiary amine oxide.

## Revendications

1. Procédé de fabrication de feuilles plates cellulosiques (12), dans lequel une solution (1) de cellulose dans un amino-oxyde tertiaire aqueux est transformée en une bande (4) en forme de feuille au moyen d'une tuyère d'extrusion (2) qui présente une fente d'extrusion (3) allongée, et est transportée à travers une fente d'air (5) jusque dans un bain de précipitation (6), la feuille plate cellulosique (12) étant formée dans le bain de précipitation (6),
**caractérisé en ce que**
la solution transformée en bande (4) est mise en contact sur ses bords latéraux (7) avec des rubans cellulosiques (8) et reliée avec ceux-ci, et **en ce que** sur les bords latéraux (7) de la solution transformée en bande (4) et, le cas échéant, de la feuille plate cellulosique (12), les rubans cellulosiques (8) sont guidés de manière à empêcher un retrait transversal.

2. Procédé selon la revendication 1, **caractérisé en ce que** les rubans cellulosiques (8) sont reliés par pressage à la solution transformée en bande (4).

3. Procédé selon l'une ou l'autre des revendications 1 et 2, **caractérisé en ce que** les rubans cellulosiques (8) sont reliés par traction à la solution transformée en bande (4).

4. Procédé selon l'une quelconque des revendications 1 à 3, **caractérisé en ce que** les rubans cellulosiques (8) sont reliés à la solution transformée en bande (4) par des dispositifs de traction et/ou de pressage (11), en particulier par des rouleaux qui sont humectés de liquide de précipitation.

5. Procédé selon l'une quelconque des revendications 1 à 4, **caractérisé en ce que** la feuille plate cellulosique (12) reliée aux rubans cellulosiques (8) est guidée à travers le bain de précipitation (6) et ensuite à travers un banc de lavage.

6. Procédé selon la revendication 5, **caractérisé en ce qu'**après le banc de lavage, la feuille plate cellulosique (12) reliée aux rubans cellulosiques (8) est passée par un séchoir.

7. Procédé selon la revendication 6, **caractérisé en ce qu'**après le séchage, la feuille plate cellulosique (12) reliée aux rubans cellulosiques (8) est amenée à un dispositif d'embobinage.

8. Procédé selon l'une ou plusieurs des revendications 1 à 7, **caractérisé en ce que** les rubans cellulosiques (8) sont guidés via des rainures de passage (15).

9. Procédé selon l'une ou plusieurs des revendications 1 à 8, **caractérisé en ce que** les rubans cellulosiques (8) sont guidés par traction ou pression, et par exemple au moyen de rouleaux de pressage.

10. Procédé selon l'une ou plusieurs des revendications 1 à 9 **caractérisé en ce que** la feuille plate cellulosique (12) est étirée transversalement par guidage divergent des rubans cellulosiques (8).

11. Procédé selon l'une ou plusieurs des revendications 1 à 10, **caractérisé en ce qu'**on utilise comme rubans cellulosiques des bandes de bordure retordues pour former une corde, qui se produisent découpage des bords d'une feuille plate cellulosique (12) plate fabriquée suivant un procédé selon l'une quelconque des revendications 1 à 10.

12. Procédé selon l'une ou plusieurs des revendications 1 à 11, **caractérisé en ce que** les rubans cellulosiques (8) sont imprégnés d'une solution d'un amino-oxyde tertiaire avant d'être reliés à la solution transformée en bande (4).
